# EUROPEAN PATENT SPECIFICATION

(11) **EP 3 233 668 B1**
(45) Date of publication and mention of the grant of the patent: **01.04.2020**
(21) Application number: 14908259.6
(22) Date of filing: 19.12.2014
(51) Int. Cl.: B65D 81/38, A47J 41/00

(54) **VACUUM VESSELS**
VAKUUMGEFÄSSE
RÉCIPIENTS SOUS VIDE

(43) Date of publication of application: 25.10.2017
(73) Proprietor: Dow Global Technologies LLC, Midland, MI 48674 (US)
(72) Inventor: CAI, Jie, Shanghai 201108 (CN); GUO, Yongjin, Shanghai 200240 (CN); ZAWISZA, Jeffery D., Midland, Michigan 48642 (US); CHEN, Cheng, Midland, Michigan 48674 (US); LI, Dachao, Midland, Michigan 48674 (US); LIU, Wei, Midland, Michigan 48674 (US); CHEN, Jing, Midland, Michigan 48674 (US); GUO, David Hongfei, Pudong Shanghai 201204 (CN)
(74) Representative: Beck Greener LLP
(86) International application number: PCT/CN2014/094426
(87) International publication number: WO 2016/095224

(56) References cited:
- CN-A- 103 479 240
- DE-C- 844 208
- FR-B1- 2 704 842
- JP-A- 2003 033 264
- US-A1- 2012 297 813
- US-A1- 2013 213 978

## Description

### Field of Disclosure

Embodiments of the present disclosure are directed towards vacuum vessels, more specifically, embodiments are directed towards insulating devices and high insulating systems including vacuum vessels.

### Background

Vacuum vessels have an insulation performance due at least in part to a cavity with a volume that can be evacuated to and maintained at a vacuum state (e.g., a partial vacuum state) below an ambient pressure surrounding the vacuum vessel. Vacuum vessels can be used in a variety of applications. For example, vacuum vessels can be employed in a thermos, cooler, insulated cup, thermal insulated lunch box, thermal insulated electric pot, refrigerator or freezer, among other applications. For some applications, a thermal insulating material can be disposed in a cavity of a vacuum vessel to provide thermal insulation, among other properties. In such applications, the cavity and the thermal insulating material disposed therein can be evacuated to a vacuum state. Vacuum vessels are known from US2012/0297813 and DE844208.

### Brief Description of the Drawings

Figure 1 illustrates a profile view of an example embodiment of a vacuum vessel according to the present disclosure.
Figure 2 illustrates a section view of a portion of an example embodiment of a vacuum vessel according to the present disclosure.
Figure 3 illustrates a profile view of an example embodiment of an interface suitable for vacuum vessels according to the present disclosure.
Figure 4 illustrates a profile view of an example embodiment of an interface suitable for vacuum vessels according to the present disclosure.
Figure 5 illustrates a profile view of an example embodiment of an interface suitable for vacuum vessels according to the present disclosure.
Figure 6 illustrates a profile view of an example embodiment of an interface suitable for vacuum vessels according to the present disclosure.

### Summary

The present disclosure provides vacuum vessels with a shell including a continuous surface layer with a shell locking portion, a liner including a continuous surface layer with a liner locking portion, where the liner locking portion and the shell locking portion interlock the shell and the liner, a panel coupled to the continuous surface layer of the shell to form a cavity defined by the panel and the continuous surface layers of the interlocked shell and liner, and a first sealant layer and a second sealant layer disposed along an interface between the continuous surface layer of the shell and the continuous surface layer of the liner, where at least the first sealant layer is continuously disposed along an interface between the shell locking portion and the liner locking portion to allow the cavity to maintain a partial vacuum relative an ambient pressure outside the cavity.

The present disclosure provides an insulating device with a vacuum vessel including a shell including a continuous surface layer with a shell locking portion having at least one of a recess or a protrusion, a liner including a continuous surface layer with a liner locking portion having at least one of a recess or a protrusion interlocks with the at least one of the recess or the protrusion of the shell locking layer such that the shell locking portion and the liner locking portion together define a recess and a protrusion that projects into at least a portion of the recess to interlock the shell and the liner, a space defined by the continuous surface layer of the liner and a door of the insulating device, a panel coupled to the continuous surface layer of the shell to form a cavity defined by defined by the panel and the continuous surface layers of the interlocked shell and liner, and a vacuum seal including a first sealant layer and a second sealant layer disposed along an interface between the continuous surface layer of the shell and the continuous surface layer of the liner to vacuum seal the cavity, where the first sealant layer is continuously disposed along a locking interface between the shell locking portion and the liner locking portion to allow the cavity to maintain a partial vacuum relative to an ambient pressure outside the cavity.

The present disclosure provides a high vacuum vessel with a shell including a continuous surface layer with a shell locking portion having at least one of a recess or a protrusion, a liner including a continuous surface layer with a liner locking portion having at least one of a recess or a protrusion interlocks with the at least one of the recess or the protrusion of the shell locking layer such that the liner locking portion and the shell locking portion interlock the shell and the liner, a panel coupled to the continuous surface layer of the shell to form a cavity defined by the panel and the continuous surface layers of the interlocked shell and liner, an evacuated thermal insulating material disposed in the cavity, a portion of a cooling system including an evaporator disposed in the cavity and another portion of the cooling system disposed outside of the cavity, and a first sealant layer and a second sealant layer disposed along an interface between the continuous surface layer of the shell and the continuous surface layer of the liner, where at least the first sealant layer is continuously disposed along aa locking interface between the at least one of the recess or the protrusion of the shell locking portion and the at least one of the recess or the protrusion of the liner to allow the cavity to maintain a partial vacuum relative to an ambient pressure outside the cavity such that the cavity has a ΔP/ΔT equal to or less than 0.00000015 millibar/second, where ΔP is equal to a difference between a first pressure inside the cavity and a second pressure inside the cavity, where ΔT is equal to a difference between a time associated with measurement of the first pressure and a subsequent time associated with measurement of the second pressure, and a cooling system, where a portion of a cooling system including an evaporator is disposed in the cavity and another portion of the cooling system is disposed outside of the cavity.

The above summary of the present disclosure is not intended to describe each disclosed embodiment or every implementation of the present disclosure. The description herein has been made in an illustrative fashion, and not a restrictive one. The scope of the various embodiments of the present disclosure includes other applications and/or components that will be apparent to those of skill in the art upon reviewing the above description. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Vacuum vessels, insulating devices, high insulating systems, and methods of forming the same are disclosed herein. A vacuum vessel refers to a vessel having an insulation performance due at least in part to a cavity (i.e., an evacuable cavity) with a volume that can be evacuated to a vacuum state (e.g., a partial vacuum state) below an ambient pressure surrounding the vacuum vessel. Vacuum vessels can be used in a variety of applications. For instance, a vacuum vessel can be included in an insulating device and/or a high insulating system such as a thermos, cooler, insulated cup, thermal insulated lunch box, thermal insulated electric pot, refrigerator or freezer, among other applications. For some applications, including those utilized in high insulating systems, a thermal insulating material can be disposed in a cavity of a vacuum vessel to provide thermal insulation, among other properties. In such an application, the cavity and the thermal insulating material disposed therein can be evacuated to a vacuum state.

As used herein, an insulating device refers to a device including, amongst other things, a vacuum vessel with thermal insulating material disposed in a cavity of the vacuum device, as described herein. As used herein, a high insulating system refers to a system including, amongst other things, a vacuum vessel with an evacuated thermal insulating material disposed in a cavity of the vacuum device such that such that the cavity has a ΔP/ΔT equal to or less than 0.00000015, where ΔP is equal to a difference between a first pressure inside the cavity and a second pressure inside the cavity, where ΔT is equal to a difference between a time associated with measurement of the first pressure and a subsequent time associated with measurement of the second pressure, among other qualities. For example, a high insulating system has a desirable thermal insulating quality, for instance, an R-value of at least 15 meter^{2∗}kelvin/watt, where due at least in part to the cavity having has a ΔP/ΔT equal to or less than 0.00000015 millibar/second and/or a thermal insulating material being disposed in the cavity, among other factors.

Other approaches to vacuum vessels may rely on coupling member(s), such as a metal (e.g., steel) coupling member(s), in addition to other components of the vacuum vessels such as walls that define at least a portion of the vacuum vessel and/or rely on a single seal intended to form and/or seal a vacuum cavity. Moreover, some vacuum vessels may not include a heat exchanger, such as those included in cooling system and/or a heating system, at least partially disposed within a vacuum cavity of the vacuum vessel. Vacuum vessels employing such coupling member(s), a single sealant layer, and/or without at least a portion of a cooling and/or heating system disposed in a vacuum cavity thereof may result in the vacuum vessels including the same being ineffective (e.g., not able to achieve and/or maintain a desired vacuum state) and/or costly (e.g., difficult to manufacture), among other difficulties.

In some approaches, a vacuum pump may be used to evacuate gas and/or liquid from a cavity with thermal insulating material (e.g., a foam) disposed in the cavity in an effort to improve a thermal insulating quality of the thermal insulating material. For example, vacuum insulated refrigeration can be made by building refrigerator including a refrigeration cabinet that has a hermetically sealed insulation cavity and filling that cavity with a porous material (e.g., in order to support the walls against atmospheric pressure upon evacuation of the insulation space). A vacuum pump may be necessary to intermittently re-evacuate this insulation cavity due to the intrusion of air and/or water vapor by permeation. For instance, as shown in EP-A-587546, providing a refrigerator with a vacuum pump may result in the vacuum pump running almost continuously and may undesirably increase overall energy consumption of the refrigerator.

An alternative to such approaches is to remove the vacuum pump from the refrigerator in an effort to reduce overall energy consumption of the refrigerator. For instance, the cavity may be maintained at low pressure over the course of an expected service life of the refrigerator. The vacuum performance of the cavity depends on two aspects: performance of a seal of the cavity and respective gas and/or liquid permeability of materials comprising the cavity when sealed by the seal (e.g., materials of an outer wall and/or inner wall of a vacuum system). Utilizing nearly impermeable materials as the components of the cavity can promote maintaining the cavity at a low pressure. However, even with use of nearly impermeable materials, vacuum systems may experience permeation of gases through the seal between the materials comprising the cavity. For example, a water vapor transmission rate may be ∼50 times greater through the seal compared to water vapor transmission rates through the than through materials (e.g., barrier films) comprising the cavity. Moreover, for oxygen, typical seal layer materials offer little oxygen diffusion resistance. As such, a corresponding Vacuum Insulation Panel (VIP) lifetime of a refrigerator or similar vacuum vessel including a cavity at a vacuum may be undesirably short in duration.

In contrast, embodiments of the present disclosure are directed to vacuum vessels, more specifically, insulating devices and high insulating systems including vacuum vessels. In an example embodiment, a vacuum vessel can include a shell including a continuous surface layer with a shell locking portion, a liner including a continuous surface layer with a liner locking portion, where the liner locking portion and the shell locking portion interlock the shell and the liner and include a first sealant layer and a second sealant layer disposed along an interface between the continuous surface layer of the shell and the continuous surface layer of the liner. Advantageously, vacuum vessels, as detailed herein, do not rely on such coupling member(s) in addition to the components of the vacuum vessel (e.g., a shell and a liner) and advantageously include a first sealant layer and a second sealant layer along an interface between the continuous surface layer of the shell and the continuous surface layer of the liner. In exemplary embodiments, a sealing method (e.g., interlocking of a recess and a protrusion to interlock a shell and a liner including the recess and the protrusion) is provided to seal the vacuum vessel independent of a particular type of material(s) of the shell and liner. Additional advantages can be realized through use of vacuum vessels including cooling systems and/or heating systems where at least a portion of cooling systems and/or heating systems including a heat exchanger (e.g., an evaporator) is disposed in a cavity of the vacuum vessel to promote maintaining a desired vacuum state, among other advantages.

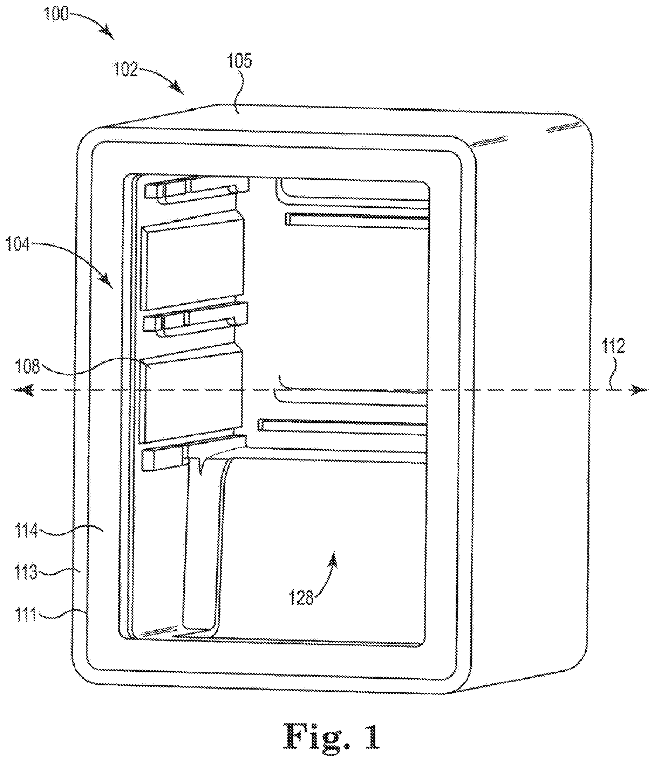

Figure 1 illustrates a profile view of an example of a vacuum vessel 100 according to the present disclosure. As illustrated in Figure 1, a vacuum vessel 100 can include a shell 102 and a liner 104. The shell 102 and liner 104 are formed of a metal, plastic, or other suitable gas-impermeable material or combination of materials including a gas impervious material. In accordance with a number of embodiments, the shell 102 can be formed of a metal such as steel and the liner 104 can be formed of a plastic such as polyethylene terephthalate, among other suitable materials.

As illustrated in Figure 1, the shell 102 and liner 104 are each box shaped with a respective opening to form vacuum vessel 100 having opening 128. That is, the shell 102 and the liner 104 are joined in an integral fashion at an interface 111 located at respective peripheries thereof to form a double walled vacuum vessel 100. For instance, as illustrated in Figure 1 and described herein, a flange 113 of the shell 102 and a flange 114 of liner 104 can intersect or otherwise facilitate the liner 104 and the shell 102 to be joined in an integral fashion at intersection 111 between the liner 104 and the shell 102. While the vacuum vessel 100 is illustrated as box shaped with four rounded corners the present disclosure is not so limited. Rather, the shape of the vacuum vessel 100 and any corners thereof can be varied (e.g., square corners) depending upon a desired application of the vacuum vessel 100 or to otherwise to promote vacuum vessels, as described herein.

The shell 102 includes a continuous surface layer 105 with a shell locking portion, as described herein. In a number of embodiments, the shell 102 extends continuously (e.g., without a seam or opening) to the flange 113 and the shell locking portion. The liner 104 includes a continuous surface layer 108 with a liner locking portion, as described herein. In number of embodiments, the liner 104 extends continuously along the periphery of opening 128 in the vacuum vessel 100 to the flange 114 and the liner locking portion. That is, the continuous surfaces layers of the shell and liner 105, 108, form the respective shapes of the shell 102 and liner 104 and are formed of the same materials as the shell 102 and liner 104, respectively.

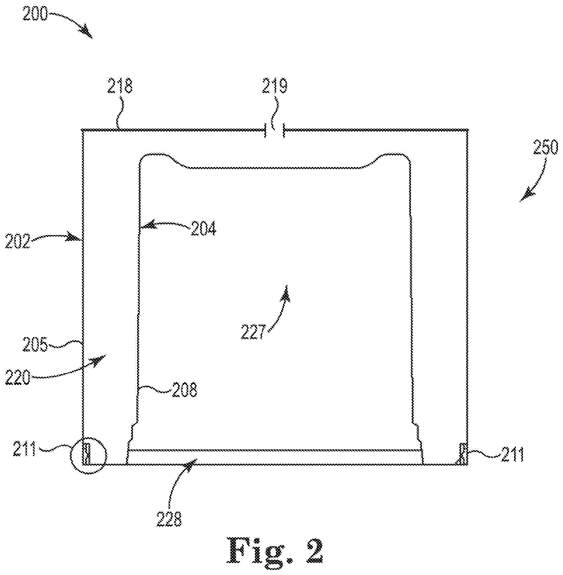

Figure 2 illustrates a section view of a portion of an example of a vacuum vessel 200 according to the present disclosure. The section view is taken along cross section 112 of the vacuum vessel 100, as illustrated in Figure 1. As used herein, vacuum vessel 200 and components thereof are analogous to vacuum vessel 100 and corresponding components thereof. That is, with regard to the figures, the same part numbers designate the same or similar parts throughout the figures. The figures are not necessarily to scale. For instance, interface 211 in Figure 2 is analogous to interfaces 111, 311, 411, 511, and 611 in Figures 1, 3, 4, 5, and 6, respectively. Relative sizes of some components of vacuum vessels illustrated in Figure 1-6 are exaggerated to more clearly illustrate the embodiments shown.

As illustrated in Figure 2, the vacuum vessel 200 includes a panel 218 that defines a portion of a cavity 220. The panel 218 can be integral with the continuous surface layer 205 of the shell 202 or the panel 218 can be formed of a component separate from the continuous surface layer 205 of the shell 202. That is, in accordance with one or more embodiments, the panel 218 can be formed of an integral portion (e.g., a back portion) of the shell 202. Alternatively, the panel can be formed of a metal, plastic, or other suitable gas-impermeable material or combination of materials including a gas-impervious material that is separate and distinct from the continuous surface layer 205 of the shell 202. In such embodiments, the panel 218 can be welded, adhered, mechanically connected and/or otherwise coupled to the continuous surface layer 205 of the shell 202 in a manner suitable to define a portion of a cavity 220 of the vacuum vessel.

The vacuum vessel 200 includes a panel 218 coupled to or integral with the continuous surface layer 205 of the shell 202 to form a cavity 220 defined by the panel 218 and the continuous surface layers 205, 208 of the interlocked shell 202 and liner 204, as described herein. The cavity 220 can be evacuated to and maintained at a desired vacuum state, as described herein. While illustrated in Figure 2 as substantially u-shaped, the cavity 220 can be formed in various shapes and/or dimensions depending upon a desired application of the vacuum vessel 200 and/or to otherwise promote vacuum vessels as described herein. An exterior region 250 (i.e., an environment) surrounding the cavity 220 is at an ambient pressure (i.e., an ambient environmental).

The cavity 220 can, in a number of embodiments such as those directed to high insulating systems, include a thermal insulating material (not shown) disposed in some or all of an inner volume of the cavity 220 of the insulating device 200. Thermal insulating material can in a number of embodiments be formed of foam(s) such a polyurethane foam, an inorganic powder such as perlite, and/or a low thermal conductivity gas including at least one of gases such as Xenon, Krypton and Argon or other suitable thermal insulating material.

As referred to herein, polyurethanes are polymers including chains of units joined by carbamate links, which may be referred to as urethane links. Polyurethanes can be formed by reacting polyisocyanates with a polyol and/or other components. In one or more embodiments herein, an evacuated thermal insulating material (e.g., evacuated foam) is disposed in the cavity 220 (e.g., an entire volume of cavity 220). For instance, an open cell foam can be disposed in the cavity 220 and can be evacuated to advantageously promote a cavity having a ΔP/ΔT equal to or less than 0.00000015 millibar/second, in contrast to other approaches which may employ use of a closed cell foam. As used herein, an open cell of a polyurethane foam is defined as the cell which is not completely closed and directly or indirectly interconnecting with other cells, and is measured according to ASTM D2856. The "open cell" foam can have an open cell volume of at least 10% based on all the cells in the rigid PU foam. Preferably, the rigid PU foam of the present disclosure can have an open cell volume content from 35% to 95% based on all the cells in the rigid PU foam. These percentage values can be determined using ASTM D2856, as stated above. As used herein, a "closed cell" of a polyurethane foam is defined as the cell which is completely closed and non-connecting with any other cells, and is measured according to ASTM D2856.

Thermal insulation material can be provided to the cavity 220 via a vent(s) in at least one of the liner 204 or the shell 202. As illustrated in Figure 2, in an example embodiment, the panel 218 can include a vent 219 providing access to the cavity 220 to enable installation and configuration of a piping, power wires, cooling/heating systems including a heat exchanger (e.g., an evaporator), etc. into the cavity 220 and/or the space 227, facilitate evacuating the cavity 220, enable thermal insulating material to be provided to the cavity 220, and/or enabling venting of the cavity 220 (e.g., venting during provision of thermal insulating material to the cavity 220), among other possible functions.

In one or more embodiments, a cooling system and/or a heating system can be included in an insulation device. As used herein, a cooling system refers to a system operable to cool a space 227 of the vacuum vessel 200 and a heating system refers to a system operable to heat the space 227 of the vacuum vessel. That is, in one or more embodiments, a heat exchanger of a cooling system and/or a heating system can be in a heat transfer relationship with the space 227 of the vacuum vessel 200. Space 227 refers to a volume defined by the continuous surface 208 of the liner, a door (not shown), and a seal (not shown) along an interface between the door and the vacuum vessel 200 to enclose the space 227. Such a seal include a sealing gasket or other suitable seal to seal the space. The seal can be provided as an integral component with the door or can be provided as separate component and coupled to the door and/or the continuous surface of the liner, among other possibilities.

In one or more embodiments, a portion of a cooling system including an evaporator (not shown for ease of illustration) can be disposed in the cavity 220 and another portion of the cooling system (not shown for ease of illustration), for example, a condenser, can be disposed in the cavity 220. Advantageously, having at least a portion of the cooling system and/or the heating system such as a heat exchanger (e.g., an evaporator) disposed in the cavity 220 of a vacuum vessel 200 can enable the heat exchanger to be in a heat transfer relationship with the space 227 of the vacuum vessel 200 promoting maintaining the cavity 220 in a desired vacuum state. As used herein, a desired vacuum state refers to vacuum state with a ΔP/ΔT equal to or less than 0.00000015 millibar/second, where ΔP is equal to a difference between a value of first pressure inside the cavity and a value of a second pressure inside the cavity, where ΔT is equal to a difference between a time associated with measurement of the value of the first pressure and a subsequent time associated with measurement of the value of the second pressure. However, the present disclosure is not so limited. That is, the evaporator and/or another portion of a cooling and/or heating system can, in some embodiments, can be disposed within the space 227.

The vent 219 can, for example, be formed by an evacuation tube and/or an evacuation hole, among other suitable components and/or passages that can provide access to the cavity 220 and can be vacuum sealed, as described herein. For example, in one or more embodiments, the panel 218 includes integrated vents including venting ports and vacuum pumping vents providing access to the cavity 220. Vents can be pressure sealed by welding, a physical plug, sealant, and/or other suitable material and/or method to pressure seal the vents. In a number of embodiments, the vents can be sealed following provisioning of the cavity with thermal insulating material, among other possibilities. While Figure 2 illustrates a single vent 219 passing through the panel 218, the present disclosure is not so limited. That is, a total number and/or locations of the vent(s) can be varied depending upon an application of a particular vacuum vessel and/or to otherwise promote vacuum vessels, as described herein.

In various embodiments such as those directed to an insulating devices and high insulating systems, opening 228 in the vacuum vessel 200 can be enclosed by a door (not shown for ease of illustration) or other suitable component to enclose the space 227. In this manner, insulating devices and high insulating systems such as those suitable for applications including thermos, cooler, insulated cup, thermal insulated lunch box, thermal insulated electric pot, refrigerator or freezer, or the like are provided for herein.

In a number of embodiments, a first sealant layer and a second sealant layer, as described herein, are disposed along the interface 211 between the continuous surface layer 205 of the shell 202 and the continuous surface layer 208 of the liner 204. The interface 211 is a continuous interface extending along a periphery of the vacuum vessel 200 at an intersection of the continuous surface layer 205 of the shell 202 and the continuous surface layer 208 of the liner 204. In one or more embodiments, the interface 211 includes an intersection of an at least one flange (e.g., flange 114 as illustrated in Figure 1) of the continuous surface layer 208 of the liner 204 with an at least one flange (e.g., flange 113) of the continuous surface layer 205 of the shell 202.

In some applications it can be advantageous to maintain an "invisible" seal along the interface 211 that is not visible from a perspective of an observer located outside of the vacuum vessel. That is, a number of embodiments herein, such as those employing a sealant and/or an adhesive, an invisible seal (e.g., where both a first sealant layer and second sealant layers are not visible from a perspective of an observer located outside of the vacuum vessel or otherwise from outside of the cavity 220) is formed. However, in some embodiments, such as those employing sealing tape, a portion (e.g., a portion formed at least in part by a second sealant layer disposed along a non-locking interface) of a seal may be visible from a perspective of an observer located outside of the vacuum vessel.

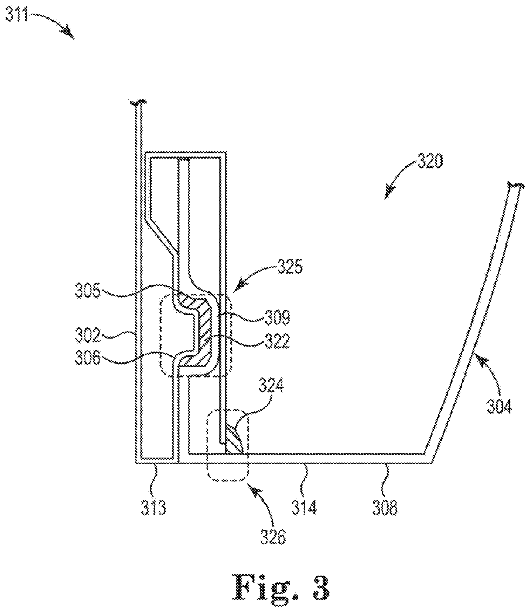

Suitable example embodiments of an interface (e.g., interface 211 as illustrated in Figure 2) are illustrated in Figures 3-6. For ease of illustration, Figures 3-6 each illustrate a portion of the continuous surface layer 205 of the shell 202 and a portion of the continuous surface layer 208 of the liner 204 that form example embodiments of a suitable interface. Notably, in each of the embodiments illustrated in Figures 3-6, a first sealant layer is continuously disposed along an interface between a shell locking portion and a liner locking portion to allow a cavity to maintain a partial vacuum relative an ambient pressure outside the cavity, among other advantages.

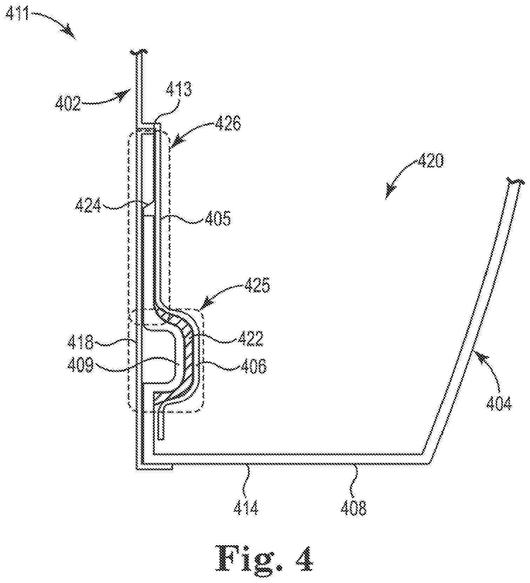

In accordance with a number of embodiments herein, a liner locking portion can defines a recess and the shell locking portion can define a protrusion that projects into at least a portion of the recess to interlock the liner locking portion and the shell locking portion, as illustrated at Figures 3, 5, and 6. However, the present disclosure is not so limited. Rather, in accordance with a number of embodiments, a shell locking portion can define a recess and a liner locking portion can define a protrusion that projects into at least a portion of the recess to interlock the liner locking portion and the shell locking portion, as illustrated at Figure 4. Regardless, a recess and a protrusion have respective dimensions including at least one dimension that is different such that a liner locking portion and a shell locking portion employing the same interlock. Such interlocking can be promoted by recesses and protrusion having substantially U-shaped concave and/or convex profiles. However, while illustrated as being substantially U-shaped in Figure 3-6, the respective shape(s), sizes, and orientation of such recesses and protrusions can be varied depending upon a desired application of a vacuum vessel.

Figure 3 illustrates a profile view of an example embodiment of an interface suitable for vacuum vessels according to the present disclosure. As illustrated in Figure 3, a first sealant layer 322 and a second sealant layer 324 are disposed along an interface 311 between the continuous surface layer 305 of the shell 302 and the continuous surface layer 308 of the liner 304, for example, to seal cavity 320. As used herein, the first sealant layer and second sealant layer can be comprised of a sealant, an adhesive, a sealing tape, or combinations thereof. Examples of sealants include, but are not limited to, silicon sealants among other suitable sealants. Examples of adhesives include, but are not limited to, an epoxy adhesive or other suitable adhesives. Examples of sealing tape include, but are not limited to, aluminum and/or copper sealing tapes or other suitable sealing tapes.

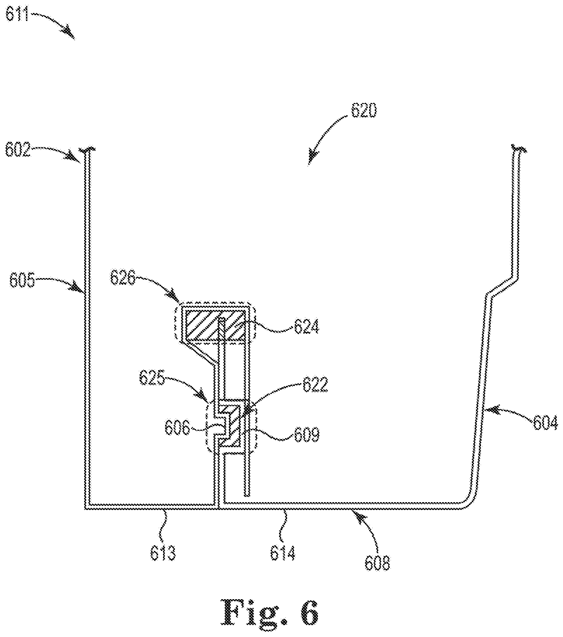

The first sealant layer 322 and the second sealant layer 324 may be formed of the same or similar materials or may be formed of different materials depending upon a desired application. For example, in various embodiments such as those illustrated in Figures 3-5, the first sealant layer 322 is formed of a sealant and the second sealant layer 324 is formed of an adhesive, however, the present disclosure is not so limited. Rather, the first sealant layer (e.g., a first sealant layer 622 as illustrated at Figure 6) can be formed of an adhesive and the second sealant layer (e.g., a second sealant layer 624) can be formed of a sealant, among other possibilities. Additionally, while the second sealant layer can be formed of an adhesive, sealant or sealing tape, the present disclosure is not so limited. That is, the second sealant layer, in a number of embodiments, can be formed by a suitable process and/or material such as those materials associated with metal welding, plastic welding, heat sealing, hot stamping, and/or vibration welding, among other possibilities. As illustrated in Figure 3, at least one flange 313 of a continuous surface layer 305 of the shell 302 can, in one or more embodiments, intersects with at least one flange 314 of the continuous surface layer 308 of the liner 304 to form at least a portion of the intersection 311.

As illustrated in Figure 4, a first sealant layer 422 and a second sealant layer 424 are disposed along an interface 411 between the continuous surface layer 405 of the shell 402 and the continuous surface layer 408 of the liner 404, for example, to seal cavity 420. In a number of embodiments such as those illustrated at Figure 3, at least a first sealant layer 322 is continuously disposed along an interface 325 between a shell locking portion 306 and a liner locking portion 309 to allow a cavity 320 to maintain a partial vacuum relative an ambient pressure outside the cavity 320. As used herein, the locking interface (i.e., the interface between at least one of a recess or a protrusion of the shell locking portion and at least one of a recess or a protrusion of the liner locking portion) couples the shell to the liner by mechanical interlocking of the liner locking portion with the shell locking portion. Put another way, interlocking of a structure of the liner locking portion with a structure of the shell locking portion provides a "snap-fit" that mechanical couples the shell to the liner and prevents movement of the shell relative the liner. In one or more embodiments, the interlocked shell and liner form a locking interface extending continuously along an entire perimeter of the vacuum vessel to promote sealing of the vacuum vessel. Additional coupling strength and/or sealing properties can be afforded by at least the first sealant layer being continuously disposed along the locking interface.

For one or more embodiments, vacuum vessels can include a non-locking interface (i.e., an interface in, partial in, or on an exterior of interface 311 at a location other than the locking interface 325 at which a second sealant layer 324 is disposed). That is, in one or more embodiments, a second sealant layer can be disposed at the non-locking interface to enhance a mechanical and/or gas-impermeable seal provided by a first sealing layer and a locking interface including the same. For example, in one or more embodiments, the second sealant layer 324 is disposed continuously along a length of the interface 326 between the continuous surface layer 305 of the shell 302 and the continuous surface layer 308 of the liner 304 in the cavity 320. However, the present disclosure is not so limited. That is, the second sealant layer 324 can, in some embodiments, be disposed at a locking interface, among other positions in, partially in, or surrounding the interface 311.

Figure 4 illustrates a profile view of an example embodiment of an interface suitable for vacuum vessels according to the present disclosure. As illustrated in Figure 4, a first sealant layer 422 and a second sealant layer 424 are disposed along an interface 411 between the continuous surface layer 405 of the shell 402 and the continuous surface layer 408 of the liner 404, for example, to seal cavity 420. In one or more embodiments, the first sealant layer 422 is disposed between a shell locking portion 406 and a liner locking portion 409 at a locking interface 425 and the second sealant layer is disposed at a non-locking interface 426. As illustrated in Figure 4, a flange 413 (e.g., a single flange) of a continuous surface layer 405 of the shell 402 can, in one or more embodiments, intersect with at least one flange 414 of the continuous surface layer 408 of the liner 404 to form at least a portion of the intersection 411. In accordance with a number of embodiments, the second sealant layer 424 is disposed continuously along a length of an interface 426 (i.e., a non-locking interface) between the continuous surface layer 405 of the shell 402 and the continuous surface layer 408 of the liner 404 in a portion of a volume between the continuous surface layer 405 of the shell 402 and the continuous surface layer 408 of the liner 404.

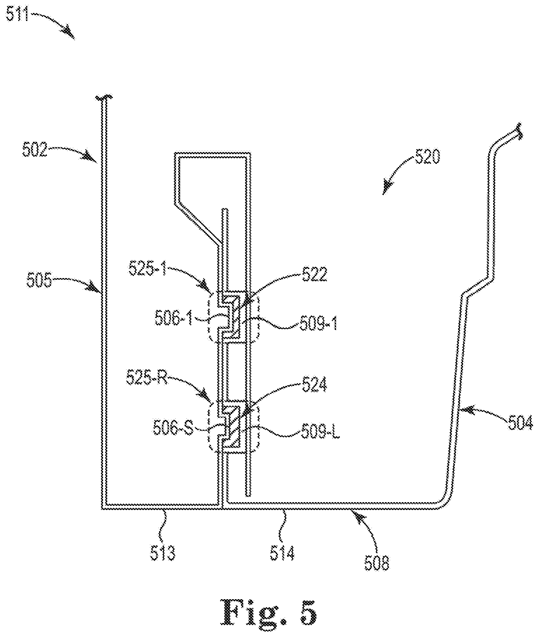

Figure 5 illustrates a profile view of an example embodiment of an interface suitable for vacuum vessels according to the present disclosure. As illustrated in Figure 5, a first sealant layer 522 and a second sealant layer 524 are disposed along an interface 511 between the continuous surface layer 505 of the shell 502 and the continuous surface layer 508 of the liner 504, for example, to seal cavity 520. In one or more embodiments, the first sealant layer 522 is disposed at a first locking interface 525-1 and the second sealant layer 524 is disposed at a second locking interface 525-R. The first locking interface 525-1 can be formed of an interface between the first shell locking portion 506-1 with the first liner locking portion 509-1. The second locking interface 525-R can be formed of an interface between the second shell locking portion 506-S with the first liner locking portion 509-L. That is, at least a first sealant layer is disposed at least one locking interface. However, the orientation, total number of interfaces (e.g., a total number of locking interfaces and/or a total number of non-locking interfaces having a respective sealant layer associated therewith) may be varied to promote vacuum vessels, as described herein. As illustrated in Figure 5, a flange 513 (e.g., at least one flange) of a continuous surface layer 505 of the shell 502 can, in one or more embodiments, intersect with at least one flange 514 of the continuous surface layer 508 of the liner 504 to form at least a portion of the intersection 511.

Figure 6 illustrates a profile view of an example embodiment of an interface suitable for vacuum vessels according to the present disclosure. As illustrated in Figure 6, a first sealant layer 622 and a second sealant layer 624 are disposed along an interface 611 between the continuous surface layer 605 of the shell 602 and the continuous surface layer 608 of the liner 604, for example, to seal cavity 620. In one or more embodiments, the first sealant layer 622 is disposed at interface 625 i.e., locking interface 625 between a liner locking portion 609 and a shell locking portion 606) and the second sealant layer 624 is disposed at interface 626 (i.e., non-locking interface 626). As illustrated in Figure 6, a flange 613 (e.g., at least one flange) of a continuous surface layer 605 of the shell 602 can, in one or more embodiments, intersect with at least one flange 614 of the continuous surface layer 608 of the liner 604 to form at least a portion of the intersection 611. In accordance with one or more embodiments, the second sealant layer 624 is disposed continuously along a length of an interface 626 between the continuous surface layer 605 of the shell 602 and the continuous surface layer 608 of the liner 604 in a portion of a volume between the continuous surface layer 605 of the shell 602 and the continuous surface layer 608 of the liner 604.

Methods of forming vacuum vessels such as those suitable for insulating devices and high insulating systems can include applying a first sealant layer to one of a shell locking portion of a continuous surface layer of a shell and a liner locking portion of a continuous surface layer of a liner. In one or more embodiments, methods of forming a vacuum vessel can include interlocking the shell locking portion and the liner locking portion of a continuous surface layer of a liner to form a cavity defined by a panel and the continuous surface layers of the interlocked shell and liner. Interlocking refers to coupling the shell locking portion and the liner locking portion mechanically. In some embodiments, interlocking can include apply a first sealant layer and/or a second sealant layer to one of a shell locking portion of a continuous surface layer of a shell and a liner locking portion of a continuous surface layer of a liner and contacting the liner locking portion in contact with the shell locking portion, among other possibilities.

Methods of forming vacuum vessels can include applying a second sealant layer to an interface between the continuous surface layer of the shell and the continuous surface layer of the liner to seal the cavity. For example, in one or more embodiments, the methods can include applying one of the shell locking portion and the liner locking portion prior to interlocking the shell locking portion and the liner locking portion. Methods of forming vacuum vessels can include injecting a thermal insulating material into the cavity to fill at least a portion of a volume of the cavity in one or more embodiments such as those directed to insulating devices and/or high insulating systems including insulating devices. That is, the methods of forming vacuum vessels, as described herein, can be utilized to form insulating devices and high insulating systems including insulating devices.

The methods of forming vacuum vessels can, in one or more embodiments include evacuating the cavity and the thermal insulating material to a desired vacuum state. For example, in a number of embodiments a desired vacuum state can refer to the cavity being in a partial vacuum state such that the cavity has a ΔP/ΔT equal to or less than 0.00000015 millibar/second, as described herein. That is, in one or more embodiments, a vacuum pump (not shown) can be permanently associated with (arranged in a vacuum vessel and/or an insulating device) and/or a vacuum pump that is not permanently associated with the vacuum vessel can facilitate evacuating and/or maintaining a cavity at a desired vacuum state. The methods forming vacuum vessels can include sealing vents, as described herein, by use of a sealant, mechanical plug, or other suitable sealing mechanism(s).

## Claims

1. A vacuum vessel (100, 200) comprising:
a shell (302, 402) including a continuous surface layer (305, 405) with a shell locking portion (306, 406);
a liner (304, 404) including a continuous surface layer (308, 408) with a liner locking portion (309, 409), where the liner locking portion (309, 409) and the shell locking portion (306, 406) interlock the shell (302, 402) and the liner (304, 404); wherein
the liner locking portion (309) defines a U-shaped recess and the shell locking portion (306) defines a U-shaped protrusion that projects into the U-shaped recess of the liner locking portion (309) to interlock the liner locking portion (309) and the shell locking portion (306);
or
the shell locking portion (406) defines a U-shaped recess and the liner locking portion (409) defines a U-shaped protrusion that projects into the U-shaped recess of the shell locking portion (406) to interlock the liner locking portion (409) and the shell locking portion (406);
the vacuum vessel (100, 200) further comprising
a panel (218) coupled to the continuous surface layer (205) of the shell (202) to form a cavity (220) defined by the panel (218) and the continuous surface layers (205, 208) of the interlocked shell (202) and liner (204); and
a vacuum seal including a first sealant layer (322, 422) and a second sealant layer (324, 424) disposed along an interface (311, 411) between the continuous surface layer (305, 405) of the shell (302, 402) and the continuous surface layer (308, 408) of the liner (304, 404), where at least the first sealant layer (322, 422) is continuously disposed along an interface (325, 425) between the U-shaped shell locking portion (306, 406) and the U-shaped liner locking portion (309, 409) to allow the cavity (320, 420) to maintain a partial vacuum relative an ambient pressure outside the cavity (320, 420).

2. The vacuum vessel (100, 200) of claim 1, where the recess and the protrusion have respective dimensions including at least one dimension that is different such that the liner locking portion (309, 409) and the shell locking portion (306, 406) interlock.

3. The vacuum vessel (100, 200) of claim 1, where the panel (218) is formed of an integral portion of the shell (202, 302, 402).

4. The vacuum vessel (100, 200) of claim 1, where the interlocked shell (302, 402) and liner (304, 404) form a locking interface extending continuously along an entire perimeter of the vacuum vessel (100, 200).

5. The vacuum vessel (100, 200) of claim 1, where the first sealant layer (322, 422) and second sealant layer (324, 424) are comprised of a sealant, an adhesive, a sealing tape, or combinations thereof.

6. The vacuum vessel (100, 200) of claim 1, where the panel (218), the continuous surface layer (205) of the shell (202) and the continuous surface layer (208) of the liner (204) are gas-impervious.

7. The vacuum vessel (100, 200) of claim 1, where the second sealant layer (424) is disposed continuously along a length of the interface (426) between the continuous surface layer (405) of the shell (402) and the continuous surface layer (408) of the liner (404) in a portion of a volume between the continuous surface layer (405) of the shell (402) and the continuous surface layer (408) of the liner (404).

8. The vacuum vessel (100, 200) of claim 1, where the second sealant layer (324) is disposed continuously along a length of the interface (326) between the continuous surface layer (305) of the shell (302) and the continuous surface layer (308) of the liner (304) in the cavity (320).

9. An insulating device comprising:
the vacuum vessel (100, 200) of claim 1;
a door; and
a space (227) defined by the continuous surface layer (208) of the liner (204) and the door of the insulating device.

10. The insulating device of claim 9, including an evacuated thermal insulating material is disposed in the cavity (220).

11. The insulating device of claim 9, where the space (227) is defined by the continuous surface layer (208) of the liner (204), the door, and a sealing gasket provided along an interface between the vacuum vessel (200) and the door.

12. An insulating system comprising:
the vacuum vessel (100, 200) of claim 1;
and an evacuated thermal insulating material disposed in the cavity (220);
wherein the cavity (220) has a ΔP/ΔT equal to or less than 0.00000015 millibar/second, where ΔP is equal to a difference between a first pressure inside the cavity (220) and a second pressure inside the cavity (220), where ΔT is equal to a difference between a time associated with measurement of the first pressure and a subsequent time associated with measurement of the second pressure; and
a cooling system, where a portion of a cooling system including an evaporator is disposed in the cavity (220) and another portion of the cooling system is disposed outside of the cavity (220).

13. The insulating system of claim 12, where the panel (218) includes integrated access ports including venting ports and vacuum pumping ports providing access to the cavity (220).

## Patentansprüche

1. Ein Vakuumbehälter (100, 200), der Folgendes beinhaltet:
eine Ummantelung (302, 402), umfassend eine durchgehende Oberflächenschicht (305, 405) mit einem Ummantelungsverriegelungsabschnitt (306, 406);
eine Auskleidung (304, 404), umfassend eine durchgehende Oberflächenschicht (308, 408) mit einem Auskleidungsverriegelungsabschnitt (309, 409), wobei der Auskleidungsverriegelungsabschnitt (309, 409) und der Ummantelungsverriegelungsabschnitt (306, 406) die Ummantelung (302, 402) und die Auskleidung (304, 404) wechselseitig verriegeln;
wobei
der Auskleidungsverriegelungsabschnitt (309) eine U-förmige Aussparung definiert und der Ummantelungsverriegelungsabschnitt (306) einen U-förmigen Vorsprung definiert, der in die U-förmige Aussparung des Auskleidungsverriegelungsabschnitts (309) hineinragt, um den Auskleidungsverriegelungsabschnitt (309) und den Ummantelungsverriegelungsabschnitt (306) wechselseitig zu verriegeln;
oder
der Ummantelungsverriegelungsabschnitt (406) eine U-förmige Aussparung definiert und der Auskleidungsverriegelungsabschnitt (409) einen U-förmigen Vorsprung definiert, der in die U-förmige Aussparung des Ummantelungsverriegelungsabschnitts (406) hineinragt, um den Auskleidungsverriegelungsabschnitt (409) und den Ummantelungsverriegelungsabschnitt (406) wechselseitig zu verriegeln;
wobei der Vakuumbehälter (100, 200) ferner Folgendes beinhaltet:
eine Platte (218), die mit der durchgehenden Oberflächenschicht (205) der Ummantelung (202) gekoppelt ist, um einen Hohlraum (220) zu bilden, der durch die Platte (218) und die durchgehenden Oberflächenschichten (205, 208) der wechselseitig verriegelten Ummantelung (202) und Auskleidung (204) definiert ist; und
eine Vakuumdichtung, umfassend eine erste Abdichtungsschicht (322, 422) und eine zweite Abdichtungsschicht (324, 424), die entlang einer Grenzfläche (311, 411) zwischen der durchgehenden Oberflächenschicht (305, 405) der Ummantelung (302, 402) und der durchgehenden Oberflächenschicht (308, 408) der Auskleidung (304, 404) angeordnet ist, wobei mindestens die erste Abdichtungsschicht (322, 422) durchgehend entlang einer Grenzfläche (325, 425) zwischen dem U-förmigen Ummantelungsverriegelungsabschnitt (306, 406) und dem U-förmigen Auskleidungsverriegelungsabschnitt (309, 409) angeordnet ist, um zu ermöglichen, dass der Hohlraum (320, 420) relativ zu einem Umgebungsdruck außerhalb des Hohlraums (320, 420) ein Teil-Vakuum aufrechterhält.

2. Vakuumbehälter (100, 200) gemäß Anspruch 1, wobei die Aussparung und der Vorsprung jeweilige Abmessungen aufweisen, umfassend mindestens eine Abmessung, die sich derart unterscheidet, dass sich der Auskleidungsverriegelungsabschnitt (309, 409) und der Ummantelungsverriegelungsabschnitt (306) 406) wechselseitig verriegeln.

3. Vakuumbehälter (100, 200) gemäß Anspruch 1, wobei die Platte (218) aus einem integralen Abschnitt der Ummantelung (202, 302, 402) gebildet ist.

4. Vakuumbehälter (100, 200) gemäß Anspruch 1, wobei die Ummantelung (302, 402) und die Auskleidung (304, 404), die sich wechselseitig verriegeln, eine Verriegelungsgrenzfläche bilden, die sich durchgehend entlang eines gesamten Umfangs des Vakuumbehälters (100, 200) erstreckt.

5. Vakuumbehälter (100, 200) gemäß Anspruch 1, wobei die erste Abdichtungsschicht (322, 422) und die zweite Abdichtungsschicht (324, 424) ein Abdichtungsmittel, einen Klebstoff, ein Abdichtungsband oder Kombinationen davon beinhalten.

6. Vakuumbehälter (100, 200) gemäß Anspruch 1, wobei die Platte (218), die durchgehende Oberflächenschicht (205) der Ummantelung (202) und die durchgehende Oberflächenschicht (208) der Auskleidung (204) gasundurchlässig sind.

7. Vakuumbehälter (100, 200) gemäß Anspruch 1, wobei die zweite Abdichtungsschicht (424) durchgehend entlang einer Länge der Grenzfläche (426) zwischen der durchgehenden Oberflächenschicht (405) der Ummantelung (402) und der durchgehenden Oberflächenschicht (408) der Auskleidung (404) in einem Abschnitt eines Volumens zwischen der durchgehenden Oberflächenschicht (405) der Ummantelung (402) und der durchgehenden Oberflächenschicht (408) der Auskleidung (404) angeordnet ist.

8. Vakuumbehälter (100, 200) gemäß Anspruch 1, wobei die zweite Abdichtungsschicht (324) durchgehend entlang einer Länge der Grenzfläche (326) zwischen der durchgehenden Oberflächenschicht (305) der Ummantelung (302) und der durchgehenden Oberflächenschicht (308) der Auskleidung (304) in dem Hohlraum (320) angeordnet ist.

9. Eine Isoliervorrichtung, die Folgendes beinhaltet:
den Vakuumbehälter (100, 200) gemäß Anspruch 1;
eine Tür; und
einen Raum (227), der durch die durchgehende Oberflächenschicht (208) der Auskleidung (204) und die Tür der Isoliervorrichtung definiert ist.

10. Isoliervorrichtung gemäß Anspruch 9, umfassend ein evakuiertes wärmeisolierendes Material, das in dem Hohlraum (220) angeordnet ist.

11. Isoliervorrichtung gemäß Anspruch 9, wobei der Raum (227) durch die durchgehende Oberflächenschicht (208) der Auskleidung (204), die Tür und eine entlang einer Grenzfläche zwischen dem Vakuumbehälter (200) und der Tür bereitgestellte Dichtung definiert ist.

12. Ein Isoliersystem, das Folgendes beinhaltet:
den Vakuumbehälter (100, 200) gemäß Anspruch 1;
und ein evakuiertes wärmeisolierendes Material, das in dem Hohlraum (220) angeordnet ist;
wobei der Hohlraum (220) ein ΔP/ΔT von 0,00000015 Millibar/Sekunde oder weniger aufweist, wobei ΔP gleich einer Differenz zwischen einem ersten Druck innerhalb des Hohlraums (220) und einem zweiten Druck innerhalb des Hohlraums (220) ist, wobei ΔT gleich einer Differenz zwischen einer Zeit, die mit der Messung des ersten Drucks assoziiert ist, und einer nachfolgenden Zeit, die mit der Messung des zweiten Drucks assoziiert ist, ist; und
ein Kühlsystem, wobei ein Abschnitt eines einen Verdampfer umfassenden Kühlsystems in dem Hohlraum (220) angeordnet ist und ein anderer Abschnitt des Kühlsystems außerhalb des Hohlraums (220) angeordnet ist.

13. Isoliersystem gemäß Anspruch 12, wobei die Platte (218) integrierte Zugangsöffnungen, umfassend Entlüftungsöffnungen und Vakuumpumpöffnungen, umfasst, die Zugang zu dem Hohlraum (220) bereitstellen.

## Revendications

1. Une enceinte à vide (100, 200) comprenant :
une enveloppe (302, 402) incluant une couche superficielle continue (305, 405) avec une portion de verrouillage d'enveloppe (306, 406) ;
une chemise (304, 404) incluant une couche superficielle continue (308, 408) avec une portion de verrouillage de chemise (309, 409), où la portion de verrouillage de chemise (309, 409) et la portion de verrouillage d'enveloppe (306, 406) verrouillent entre elles l'enveloppe (302, 402) et la chemise (304, 404) ;
dans laquelle
la portion de verrouillage de chemise (309) définit un renfoncement conformé en U et la portion de verrouillage d'enveloppe (306) définit une protubérance conformée en U qui fait saillie jusque dans le renfoncement conformé en U de la portion de verrouillage de chemise (309) afin de verrouiller entre elles la portion de verrouillage de chemise (309) et la portion de verrouillage d'enveloppe (306) ;
ou
la portion de verrouillage d'enveloppe (406) définit un renfoncement conformé en U et la portion de verrouillage de chemise (409) définit une protubérance conformée en U qui fait saillie jusque dans le renfoncement conformé en U de la portion de verrouillage d'enveloppe (406) afin de verrouiller entre elles la portion de verrouillage de chemise (409) et la portion de verrouillage d'enveloppe (406) ;
l'enceinte à vide (100, 200) comprenant en sus
un panneau (218) couplé à la couche superficielle continue (205) de l'enveloppe (202) afin de former une cavité (220) définie par le panneau (218) et les couches superficielles continues (205, 208) de l'enveloppe (202) et de la chemise (204) verrouillées entre elles ; et
un joint d'étanchéité à vide incluant une première couche de produit d'étanchéité (322, 422) et une deuxième couche de produit d'étanchéité (324, 424) disposées le long d'une interface (311, 411) entre la couche superficielle continue (305, 405) de l'enveloppe (302, 402) et la couche superficielle continue (308, 408) de la chemise (304, 404), où au moins la première couche de produit d'étanchéité (322, 422) est disposée de façon continue le long d'une interface (325, 425) entre la portion de verrouillage d'enveloppe conformée en U (306, 406) et la portion de verrouillage de chemise conformée en U (309, 409) afin de permettre à la cavité (320, 420) de maintenir un vide partiel relativement à une pression ambiante à l'extérieur de la cavité (320, 420).

2. L'enceinte à vide (100, 200) de la revendication 1, où le renfoncement et la protubérance ont des dimensions respectives incluant au moins une dimension qui est différente de telle sorte que la portion de verrouillage de chemise (309, 409) et la portion de verrouillage d'enveloppe (306, 406) sont verrouillées entre elles.

3. L'enceinte à vide (100, 200) de la revendication 1, où le panneau (218) est formé d'une portion solidaire de l'enveloppe (202, 302, 402).

4. L'enceinte à vide (100, 200) de la revendication 1, où l'enveloppe (302, 402) et la chemise (304, 404) verrouillées entre elles forment une interface de verrouillage s'étendant de façon continue le long d'un périmètre tout entier de l'enceinte à vide (100, 200).

5. L'enceinte à vide (100, 200) de la revendication 1, où la première couche de produit d'étanchéité (322, 422) et la deuxième couche de produit d'étanchéité (324, 424) sont composées d'un produit d'étanchéité, d'un adhésif, d'un ruban d'étanchéité, ou de combinaisons de ceux-ci.

6. L'enceinte à vide (100, 200) de la revendication 1, où le panneau (218), la couche superficielle continue (205) de l'enveloppe (202) et la couche superficielle continue (208) de la chemise (204) sont imperméables aux gaz.

7. L'enceinte à vide (100, 200) de la revendication 1, où la deuxième couche de produit d'étanchéité (424) est disposée de façon continue le long d'une longueur de l'interface (426) entre la couche superficielle continue (405) de l'enveloppe (402) et la couche superficielle continue (408) de la chemise (404) dans une portion d'un volume entre la couche superficielle continue (405) de l'enveloppe (402) et la couche superficielle continue (408) de la chemise (404).

8. L'enceinte à vide (100, 200) de la revendication 1, où la deuxième couche de produit d'étanchéité (324) est disposée de façon continue le long d'une longueur de l'interface (326) entre la couche superficielle continue (305) de l'enveloppe (302) et la couche superficielle continue (308) de la chemise (304) dans la cavité (320).

9. Un dispositif d'isolation comprenant :
l'enceinte à vide (100, 200) de la revendication 1 ;
une porte ; et
un espace (227) défini par la couche superficielle continue (208) de la chemise (204) et la porte du dispositif d'isolation.

10. Le dispositif d'isolation de la revendication 9, incluant un matériau d'isolation thermique mis sous vide disposé dans la cavité (220).

11. Le dispositif d'isolation de la revendication 9, où l'espace (227) est défini par la couche superficielle continue (208) de la chemise (204), la porte, et une garniture d'étanchéité fournie le long d'une interface entre l'enceinte à vide (200) et la porte.

12. Un système d'isolation comprenant :
l'enceinte à vide (100, 200) de la revendication 1 ;
et un matériau d'isolation thermique mis sous vide disposé dans la cavité (220) ;
dans lequel la cavité (220) a un ΔP/ΔT égal ou inférieur à 0,00000015 millibar/seconde, où ΔP est égal à une différence entre une première pression à l'intérieur de la cavité (220) et une deuxième pression à l'intérieur de la cavité (220), où ΔT est égal à une différence entre un instant associé à une mesure de la première pression et un instant subséquent associé à une mesure de la deuxième pression ; et
un système de refroidissement, où une portion d'un système de refroidissement incluant un évaporateur est disposée dans la cavité (220) et une autre portion du système de refroidissement est disposée à l'extérieur de la cavité (220).

13. Le système d'isolation de la revendication 12, où le panneau (218) inclut des orifices d'accès intégrés incluant des orifices d'évacuation et des orifices de pompage à vide fournissant un accès à la cavité (220).
